# EUROPÄISCHE PATENTANMELDUNG

(11) **EP 1 092 903 A1**
(43) Veröffentlichungstag der Anmeldung: **18.04.2001**
(21) Anmeldenummer: 00119736.7
(22) Anmeldetag: 09.09.2000
(51) Int. Cl.: F16L 3/13

(54) **Leerrohrhalter**

(30) Priorität: 16.10.1999 DE 29918292 U
(71) Anmelder: fischerwerke Artur Fischer GmbH & Co. KG, D-72178 Waldachtal (DE)
(72) Erfinder: Kudlicka, Miroslav, 68201 Vtskov (CZ)

(57) **Zusammenfassung**

Die Erfindung betrifft einen Leerrohrhalter (10) zum Einclipsen eines Leerrohrs oder dgl., wobei der Leerrohrhalter einen Sockel (12) und mindestens einen vom Sockel abstehenden, federnden Klemmfinger (20) aufweist. Um den Leerrohrhalter für einen größeren Durchmesserbereich verwenden zu können, ist gemäß der Erfindung vorgesehen, dass der Klemmfinger (20) doppelwandig ist, wobei die beiden Wandungen (22, 24) gegeneinander beweglich sind. Ferner weist mindestens eine Wandung (24) ein Gelenk (26, 28, 30) auf, dessen Gelenkachse in etwa achsparallel zu einem in den Leerrohrhalter (10) eingeclipsten Leerrohr verläuft.

## Beschreibung

Die Erfindung betrifft einen Leerrohrhalter zum Einclipsen eines Leerrohrs oder dgl. mit den Merkmalen des Oberbegriffs des Anspruchs 1.

Derartige Leerrohrhalter sind an sich bekannt. Sie weisen einen Sockel auf, mit dem sie an einer Wand oder Decke beispielsweise durch Anschrauben anbringbar sind. Vom Sockel stehen üblicherweise zwei aufeinander zu gewölbte, federnde Klemmfinger ab, zwischen die ein Leerrohr eindrück- oder einclipsbar ist. Anstelle eines Leerrohrs zum Durchziehen von Kabeln kann auch ein sonstiges Rohr oder ein Kabel in den Leerrohrhalter eingeclipst werden. Es ist denkbar, den Leerrohrhalter mit nur einem federnden Klemmfinger auszubilden, der das Leerrohr zwischen sich und dem Sockel oder auch einem nicht-federnden Gegenhalter festklemmt. Die bekannten Leerrohrhalter haben den Nachteil, daß sie sich nur zum Einclipsen von Leerrohren mit begrenztem Durchmesserbereich eignen.

Der Erfindung liegt die Aufgabe zugrunde, einen Leerrohrhalter so auszubilden, daß er zum Einclipsen von Leerrohren mit einem größeren Durchmesserbereich geeignet ist.

Diese Aufgabe wird erfindungsgemäß durch die Merkmale des Anspruchs 1 gelöst. Der erfindungsgemäße Leerrohrhalter mit den Merkmalen des Anspruchs 1 weist einen doppelwandigen Klemmfinger auf, wobei die beiden Wandungen des Klemmfingers gegeneinander beweglich sind. Dabei weist zumindest eine der Wandungen ein Gelenk auf, dessen Gelenkachse in etwa achsparallel zu einem in den Leerrohrhalter eingeclipsten Leerrohr verläuft. Durch das Gelenk wird eine größere Beweglichkeit der Wandung und damit des Klemmfingers in einer Richtung quer zu einem eingeclipsten Leerrrohr erzielt, wodurch der Durchmesserunterschied der in den erfindungsgemäßen Leerrohrhalter einclips- und festklemmbaren Leerrohre größer als bei bekannten Leerrohrhaltern ist. Durch die doppelwandige Ausbildung der Klemmfinger wird trotz der Gelenkigkeit der einen Wandung eine ausreichende Federkraft und Stabilität zum Festklemmen eines in den erfindungsgemäßen Leerrohrhalters eingeclipsten Leerrohrs erreicht. Bei Herstellung des Leerrohrhalters aus Kunststoff ist das Gelenk der einen Wandung des Klemmfingers vorzugsweise als sog. Filmscharnier ausgebildet, so daß der Leerrohrhalter einstückig und in einem Arbeitsgang durch spritzgießen oder dgl. herstellbar ist. Der Herstellungsaufwand ist somit nicht größer als bei bekannten Leerrohrhaltern.

Die Anordnung des Gelenks in Bezug auf eine Längserstreckung der Wandung des Klemmfingers kann unterschiedlich sein. Auch kann die Wandung mehrere Gelenke aufweisen. So ist bei einer Ausgestaltung der Erfindung vorgesehen, daß die Wandung des Klemmfingers über das Gelenk mit dem Sockelteil verbunden ist, d. h. das Gelenk ist nahe oder unmittelbar am Sockelteil des Leerrohrhalters angeordnet. Bei einer weiteren Ausgestaltung der Erfindung ist die eine Wandung über das Gelenk mit der anderen Wandung des Klemmfingers verbunden. Auch kann bei Ausgestaltungen der Erfindung ein Gelenk innerhalb der Längsersteckung der Wandung vorgesehen sein, so daß die Wandung gelenkig miteinander verbundene Abschnitte aufweist. Die Anordnung der Gelenke und das eventuelle Vorsehen mehrerer Gelenke beeinflußt die Beweglichkeit und die Federeigenschaften des Klemmfingers des Leerrohrhalters.

In bevorzugter Ausgestaltung weist eine Innenwandung, d. h. eine einem in den Leerrohrhalter eingclipsten Leerrohr zugewandte Wandung des Klemmfingers das Gelenk/die Gelenke auf. Die Außenwandung des Klemmfingers ist bei dieser Ausgestaltung der Erfindung vorzugsweise ohne Gelenk ausgebildet, sie stützt die Innenwandung federnd ab. Die Außenwandung ist vorzugsweise steifer ausgebildet als die Innenwandung.

Eine gute Halte- und Klemmwirkung auf ein eingeclipstes Leerrohr ergibt sich, wenn eine gewölbte innere Oberfläche der Innenwandung des Klemmfingers, mit der die Innenwandung an einem eingeclipsten Rohr anliegt, in etwa die Wölbung aufweist, die ein in den Leerrohrhalter einclipsbares Leerrohr mit kleinstem Durchmesser aufweist. Die Wölbung der inneren Oberfläche der Innenwandung ist bei dieser Ausgestaltung der Erfindung auf den kleinsten, zum Einclipsen in den Leerrohrhalter vorgesehenen Leerrohrdurchmesser abgestimmt.

Die Erfindung wird nachfolgend anhand eines in der Zeichnung dargestellten Ausführungsbeispiels näher erläutert. Es zeigen:

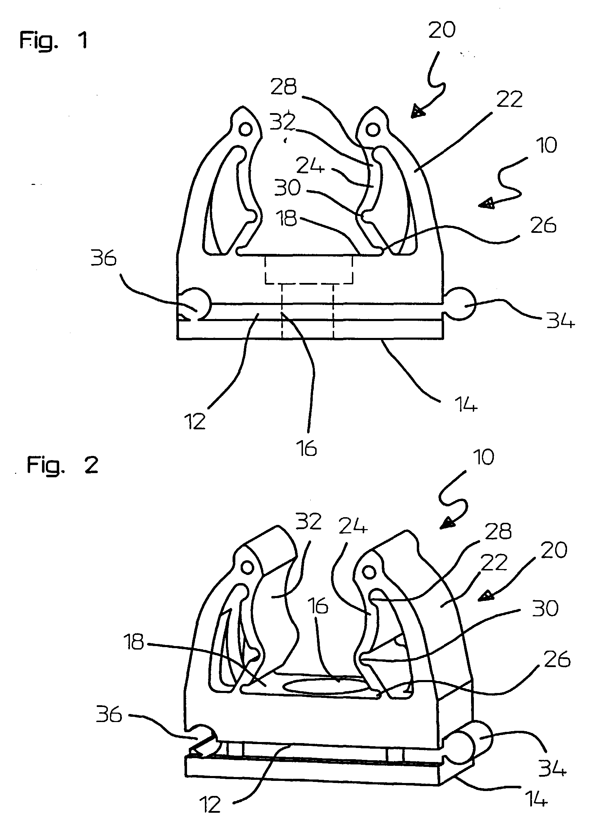

- Figur 1: einen erfindungsgemäßen Leerrohrhalter in Ansicht;
- Figur 2: den Leerrohrhalter aus Figur 1 in perspektivischer Darstellung.

Der in der Zeichnung dargestellte, insgesamt mit 10 bezeichnete, erfindungsgemäße Leerrohrhalter ist zum Befestigen sog. Leerrohre an einer Decke oder Wand vorgesehen. Die Leerrohre dienen üblicherweise zum Durchziehen von Telefon- oder Stromkabeln. Außer Leerrohren lassen sich auch sonstige Rohre, Kabel oder dgl. mit dem erfindungsgemäßen Leerrohrhalter 10 an einer Wand oder Decke befestigen.

Der Leerrohrhalter 10 weist einen quaderförmigen Sockel 12 mit rechteckiger, länglicher Grundfläche 14 auf. Zur Befestigung an einer Wand oder Decke ist der Sockel 12 mit einem durchgehenden Schraubloch 16 zum Durchstecken einer nicht gezeigten Schraube versehen.

Von einer der Grundseite 14 gegenüberliegenden Seite, die nachfolgend als Oberseite 18 des Sockels 12 des Leerrohrhalters 10 bezeichnet wird, stehen zwei bogenförmige Klemmfinger 20 vom Sockel 12 ab. Die konkaven Seiten der bogenförmigen Klemmfinger 20 sind einander zugewandt. Die Klemmfinger 20 sind mit Abstand voneinander am Sockel 12 angeordnet. Die beiden Klemmfinger 20 sind doppelwandig mit einer Außenwandung 22 und einer Innenwandung 24 ausgebildet. Die Innenwandung 24 ist über ein erstes Filmscharnier 26 mit dem Sockel 12 verbunden. Das Filmscharnier 26 ist eine dünn ausgebildete Stelle aus Kunststoff, die aufgrund ihrer dünnen Ausbildung und der Verformbarkeit des Kunststoffs ein Gelenk bildet. Ein zweites Filmscharnier 28 verbindet die Innenwandung 24 an deren dem Sockel 12 fernen Ende mit der Außenwandung 22. Zwischen den beiden Filmscharnieren 26, 28 ist ein drittes Filmscharnier 30 angeordnet, welches die Innenwandung 24 in zwei Abschnitte unterteilt, wobei im dargestellten Ausführungsbeispiel ein dem Sockel 12 naher Abschnitt etwa 1/3 und ein dem Sockel 12 ferner Abschnitt ungefähr 2/3 einer Gesamtlänge der Innenwandung 24 vom ersten bis zum zweiten Filmscharnier 26, 28 aufweist. Die Filmscharniere 26, 28, 30 bilden Gelenke, die die Innenwandung 24 schwenkbar mit dem Sockel 12, an einem dem Sockel 12 fernen Ende schwenkbar mit der Außenwandung 22 und die beiden Abschnitte der Innenwandung 24 schwenkbar miteinander verbinden. Die Innenwandung 24 ist zwischen dem ersten und dem zweiten Filmscharnier 26, 28 nicht mit der Außenwandung 22 des Klemmfingers 20 verbunden, Innenwandung 24 und Außenwandung 22 sind gegeneinander beweglich.

Die Außenwandung 22 weist keine Filmscharniere oder Gelenke auf, sie ist steifer als die Innenwandung 24 und stützt die Innenwandung 24 aufgrund einer Elastizität des Werkstoffs, aus dem der Leerrohrhalter 12 hergestellt ist, federnd ab. Die Klemmfinger 20 sind federnd ausgebildet.

Gedachte Schwenkachsen der Filmscharniere 26, 28, 30 verlaufen parallel zueinander und parallel zu einer gedachten Achse eines nicht dargestellten, zwischen die Klemmfinger 20 einclipsbaren Leerrohrs. Aufgrund der gelenkigen Ausbildung der Innenwandung 24 und der Beweglichkeit der Innenwandung 24 und der Außenwandung 22 gegeneinander ergibt sich ein großer Federweg, der Klemmfinger 20, so daß sich der Leerrohrhalter 10 für Rohre unterschiedlichen Durchmessers eignet.

Im Abschnitt zwischen dem zweiten und dem dritten Filmscharnier 28, 30 weist die Innenwandung 24 eine innere Oberfläche 32 auf, die zylinderförmig konkav gewölbt ist. Ein Durchmesser der inneren Oberfläche 32 entspricht näherungsweise einem lichten Abstand der beiden inneren Oberflächen 32 der beiden Klemmfinger 20 voneinander bei unverformten Klemmfingern 20. Die Wölbung der inneren Oberfläche 32 entspricht damit näherungsweise einer Wölbung eines kleinsten, in den Leerrohrhalter 10 einclipsbaren, nicht dargestellten Leerrohrs. Ein zwischen die Klemmfinger 20 eingeclipstes, nicht dargestelltes Leerrohr mit größerem Durchmesser liegt linienförmig an zwei Stellen im Bereich des zweiten und des dritten Filmscharniers 28, 30 an der Innenwandung 24 der beiden Klemmfinger 20 an, wodurch für ein solches Leerrohr größeren Durchmessers ebenfalles eine gute Befestigung im Leerrrohrhalter 10 erzielt wird.

Die Befestigung eines nicht dargestellten Leerrohrs im erfindungsgemäßen Leerrohrhalter 10 erfolgt in an sich bekannter Weise durch eindrücken bzw. einclipsen zwischen die beiden Klemmfinger 20. Das eingeclipste Leerrohr wird in achsialer Richtung durch eine Klemmkraft der federnd an ihm anliegenden Klemmfinger 20 und in radialer Richtung durch Formschluß zwischen den beiden Klemmfingern 20 gehalten. Durch den großen Federweg der Klemmfinger 20 sind Leerrohre mit verhältnismäßig großem Durchmesserunterschied in den Leerrrohrhalter 10 einclips- und mit dem Leerrohrhalter 10 befestigbar.

Der Sockel 12 des Leerrohrhalters 10 weist an beiden Seiten Verbindungselemente 34, 36 auf, mit denen er mit weiteren Leerrohrhaltern 10 verbindbar ist, um mehrere Leerrohre parallel zueinander an einer Wand oder Decke befestigen zu können. Eines der beiden Verbindungselemente 34 steht seitlich vom Sockel 12 ab, es ist als Feder mit einer zylinderförmigen Verdickung an ihrem freien Ende ausgebildet. Dieses Verbindungselement 34 ist kürzer als der Sockel 12 breit ist, es schließt auf einer Seite bündig mit dem Sockel 12 ab und endet auf der gegenüberliegenden Seite innerhalb einer Außenfläche des Sockels 12. Das andere Verbindungselement 36 ist als zum einen Verbindungselement 34 komplementäre Nut mit kreisförmigem, zu einer Stirnseite des Sockels 12 hin offenem Querschnitt ausgebildet, die auf einer Längsseite des Sockels 12 geschlossen endet. Das Verbinden zweier Leerrohrhalter 10 erfolgt durch Einstecken des einen Verbindungselements 34 in das andere Verbindungselement 36 des anderen Leerrohrhalters 10.

Der Leerrohrhalter 10 einschließlich seiner doppelwandigen Klemmfinger 20 und des einen Verbindungselements 34 ist einstückig aus Kunststoff hergestellt. Aufgrund einer elastischen Verformbarkeit des Kunststoffs sind die Klemmfinger 20, insbesondere deren gelenklose Außenschalen 22 federnd.

## Patentansprüche

1. Leerrohrhalter zum Einclipsen eines Leerrohrs oder dgl., wobei der Leerrohrhalter einen Sockel und mindestens einen vom Sockel abstehenden, federnden Klemmfinger aufweist, **dadurch gekennzeichnet**, daß der Klemmfinger (20) doppelwandig ist, wobei die beiden Wandungen (22, 24) gegeneinander beweglich sind, und daß mindestens eine Wandung (24) ein Gelenk (26, 28, 30) aufweist, dessen Gelenkachse in etwa achsparallel zu einem in den Leerrohrhalter (10) eingeclipsten Leerrohr verläuft.

2. Leerrohrhalter nach Anspruch 1, **dadurch gekennzeichnet**, daß die mindestens eine Wandung (24) über ein Gelenk (26) mit dem Sockelteil (12) verbunden ist.

3. Leerrohrhalter nach Anspruch 1, **dadurch gekennzeichnet**, daß die mindestens eine Wandung (24) über ein Gelenk (28) mit der anderen Wandung (22) des Klemmfingers (20) verbunden ist.

4. Leerrohrhalter nach Anspruch 1, **dadurch gekennzeichnet**, daß die mindestens eine Wandung (24) ein Gelenk (30) aufweist, das Abschnitte der Wandung (24) gelenkig miteinander verbindet.

5. Leerrohrhalter nach Anspruch 1, **dadurch gekennzeichnet**, daß eine Innenwandung (24) des Klemmfingers (20) das Gelenk/die Gelenke (26, 28, 30) aufweist.

6. Leerrohrhalter nach Anspruch 5, **dadurch gekennzeichnet**, daß die Außenwandung (22) des Klemmfingers (20) steifer ausgebildet ist als die Innenwandung (24).

7. Leerrohrhalter nach Anspruch 1, **dadurch gekennzeichnet**, daß die Innenwandung (24) eine gewölbte innere Oberfläche (32) aufweist, wobei ein Durchmesser der Wölbung in etwa einer lichten Weite des Leerrohrhalters (10) in unverformtem Zustand entspricht.
